# EUROPEAN PATENT APPLICATION

(11) **EP 4 484 229 A1**
(43) Date of publication of application: **01.01.2025**
(21) Application number: 24184693.0
(22) Date of filing: 26.06.2024
(51) Int. Cl.: B60R 25/00

(54) **DEVICE FOR LOCKING PORTS FOR ACCESS TO A VEHICLE CONTROL UNIT**

(30) Priority: 29.06.2023 IT 202300013467
(71) Applicant: Oliana, Pier Luigi, 31015 Conegliano (TV) (IT); Dal Fabbro, Emanuela, 32010 Tambre BL (IT)
(72) Inventor: Oliana, Pier Luigi, 31015 Conegliano (TV) (IT); Dal Fabbro, Emanuela, 32010 Tambre BL (IT)
(74) Representative: Modiano, Micaela Nadia

(57) **Abstract**

A device (1) for locking ports for access to a vehicle control unit, constituted by a cover (6), which can be removably positioned so as to cover an external connector (3) of a port (2) for access to a control unit of a vehicle;
the cover (6) is provided with first means (9) adapted to actuate the oscillation of one or more rocker arms or linkages (16a, 16b, 16c, 16d) provided with second means (24a, 24b, 24c, 24d) adapted to interact with the port (2) in order to temporarily couple the cover (6) to the connector (3).

A protective cap (28) is removably associable with the cover (6).

## Description

The present invention relates to a device for locking ports for access to a control unit for vehicles, such as cars or motorcycles, also known as OBD (on-board diagnostics) or OBD2 or OBD-II ports.

Currently, modern or latest-generation cars provide for the use of an electronic control unit that verifies the proper operation of the car and its efficiency by means of adapted and various sensors connected to various parts of the vehicle and to the control unit itself.

Thus, diagnostic tools are known which are connected to the electronic control unit through particular ports, known for example as OBD or OBD2 or OBD-II, for example.

The advantage of allowing fast and accurate diagnosis of the vehicle is associated with the drawback that any person, who is not for example a garage mechanic but for example a thief, has easy and immediate access to such ports and thus if he has a diagnostic tool he can, for example, acquire the codes to provide a key that allows to turn on the vehicle.

The aim of the present invention is therefore to solve the highlighted technical problems, eliminating the drawbacks of the cited background art and thus devising a device that allows to temporarily prevent the connection to ports for access to a vehicle control unit.

Within this aim, an object of the invention is to provide a device that combines the above characteristics with that of being structurally robust and free from breakage due to its use.

Another object is to provide a device that is structurally simple, takes up little space, can be provided by means of machinery and equipment of a known type, and does not interfere with the components of the port.

Not least object of the invention is to provide a device that can be applied quickly and easily to any port for access to a vehicle control unit.

This aim and these objects, as well as others which will become better apparent hereinafter, are achieved by a device for locking ports for access to a vehicle control unit, characterized in that it is constituted by a cover, which can be removably positioned so as to cover an external connector of a port for access to a control unit of a vehicle, said cover being provided with first means adapted to actuate the oscillation of one or more rocker arms or linkages provided with second means adapted to interact with said port in order to temporarily couple said cover to said connector, a protective cap being removably associable with said cover.

Further characteristics and advantages of the invention will become better apparent from the detailed description of a particular embodiment, illustrated by way of non-limiting example in the accompanying drawings, wherein:

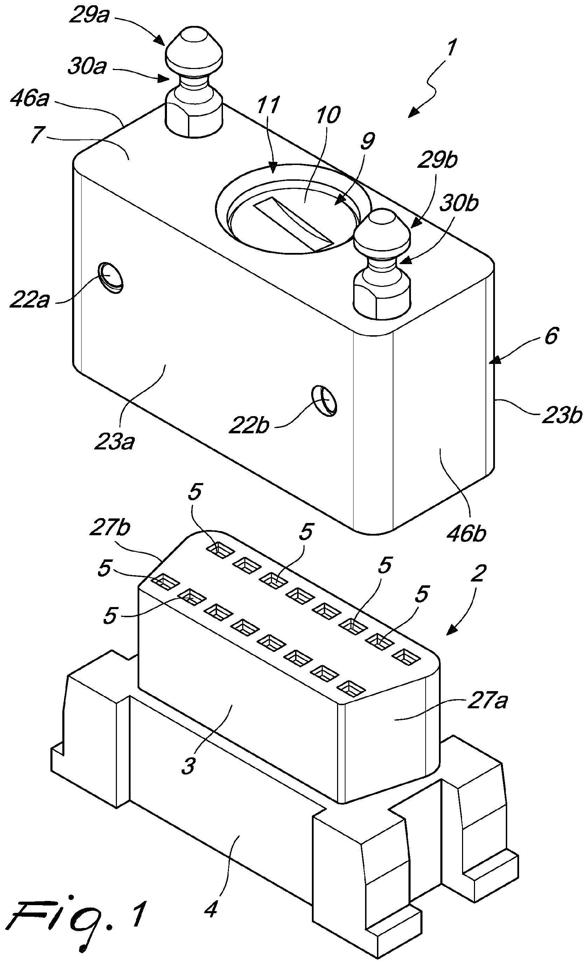

Figure 1 is a first perspective view of the device according to the invention uncoupled from the port for access to a vehicle control unit;

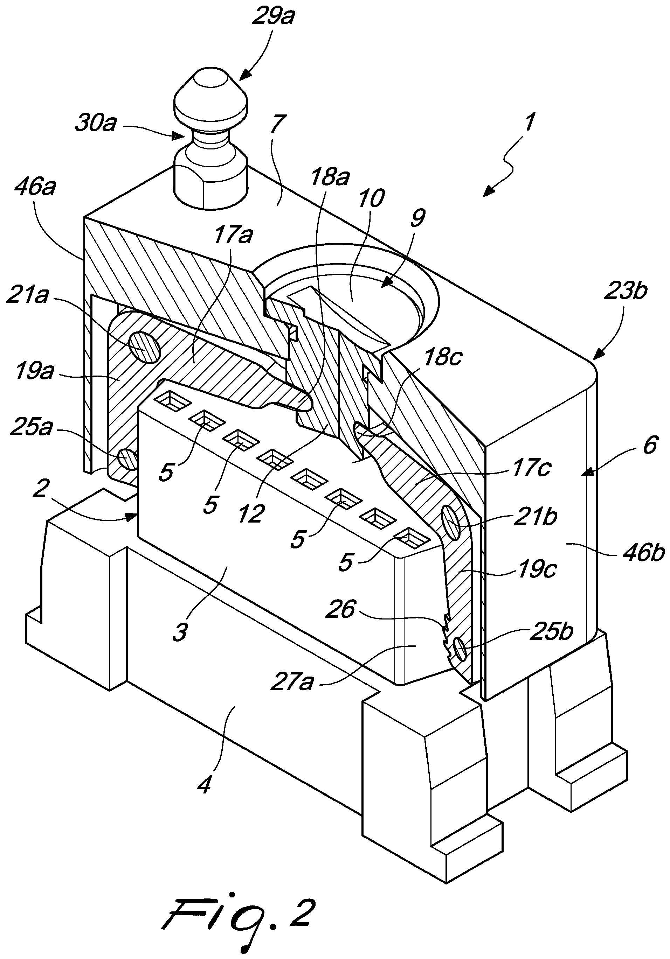

Figure 2 is a further partially sectional perspective view of the device;

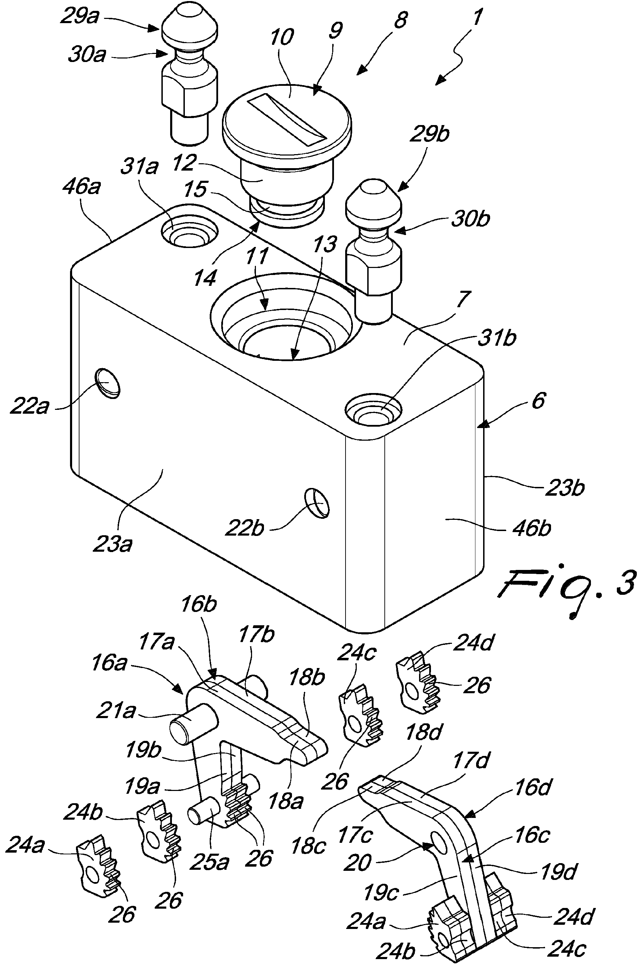

Figure 3 is an exploded perspective view of the device;
Figure 4 is a partial longitudinal sectional view of the device in the condition in which the cover and the connector are mutually uncoupled;
Figure 5 is a partial longitudinal sectional view of the device in the condition in which the cover and the support are coupled to each other;
Figure 6 is another perspective view of the device with the magnetic key uncoupled;
Figure 7 is a sectional view, taken along the plane VII-VII of Figure 6;

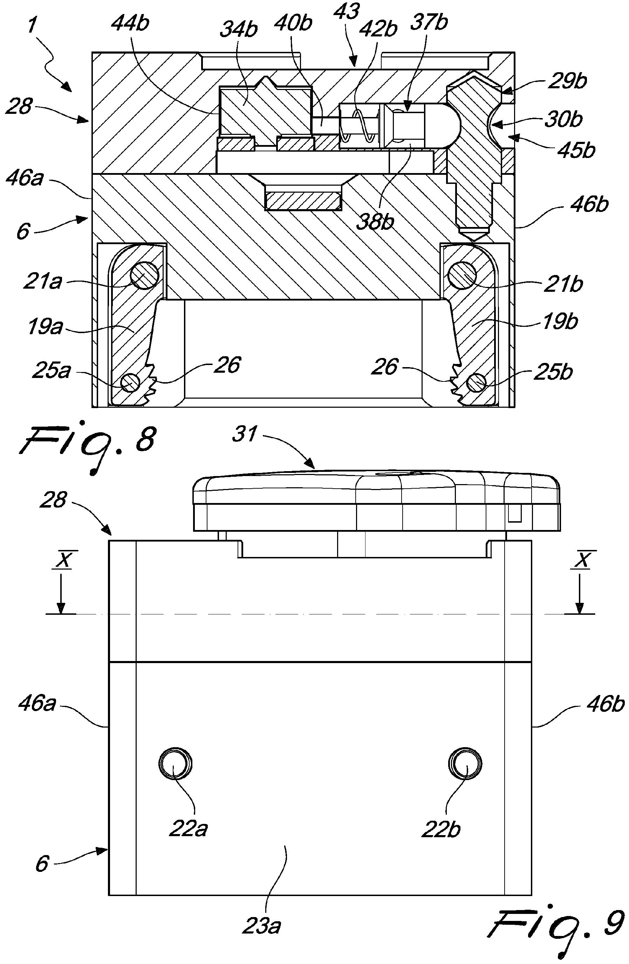

Figure 8 is a sectional view, taken along the plane VIII-VIII of Figure 6;
Figure 9 is a side view of the device with the magnetic key coupled;
Figure 10 is a sectional view, taken along the plane X-X of Figure 9;
Figure 11 is a view similar to the view of Figure 8 in the condition in which the magnetic key is coupled;
Figures 12, 13 and 14 are detail views of the operation of partially toothed claws or wheels.

With reference to the figures, a device for locking ports 2 for access to a vehicle control unit (not shown) is designated by the reference numeral 1.

The port 2 comprises a connector 3, which protrudes from a support 4 which is stably associable with the vehicle and is provided with a series of pins 5 connected to the control unit.

The connector 3 is of a standard type and therefore is usable for all vehicles.

The device 1 is constituted by a cover 6, which can be removably positioned so as to cover the connector 3, has a substantially box-like shape, is provided with an upper end face 7 on which first means 8 are associated which comprise a screw 9, the head 10 of which can be accommodated at an adapted first seat 11 provided on the upper end face 7.

The shank 12 of the screw 9 is rotatably associable at a complementarily threaded second seat 13 which is provided at the upper end face 7 of the cover 6 and is contiguous to the first seat 11.

A third annular seat 15 is provided at the terminal end 14 of the shank 12.

Moreover, the first means 8 comprise at least two pairs of rocker arms or linkages, each composed of two mutually identical rocker arms or linkages 16a, 16b, 16c, 16d which are coupled in pairs and are essentially L-shaped.

Each of the pair of two linkages 16a, 16b, 16c, 16d has a first wing 17a, 17b, 17c, 17d whose terminal end 18a, 18b, 18c, 18d has a rounded shape which is complementary to the shape of the third annular seat 15 so that it can be stably associated with it thereat.

In use, the two pairs of linkages are thus substantially arranged radially to the shank 12.

Each of the pairs of two linkages 16a, 16b, 16c, 16d has a second wing 19a, 19b, 19c, 19d.

On each of the pairs of two linkages 16a, 16b, 16c, 16d there is, at the connection between the first and second wings 17a, 17b, 17c, 17d, 19a, 19b, 19c, 19d, a fourth through seat 20 for a first pivot 21a, 21b, for the pivoting of the wings transversely to the cover 6.

In fact, the first pivots 21a, 21b act, at their ends, at a pair of adapted first holes 22a, 22b provided transversely to the lateral surfaces 23a, 23b of the cover 6 and lie at an axis which is inclined with respect to the lateral surfaces 23a, 23b; preferably, the axes of the first holes 22a and those of the first holes 22b converge toward the lateral surface 23a.

The second wings 19a, 19b, 19c, 19d are provided with second means adapted to interact with the connector 3 to temporarily couple it to the cover 6, the second means being constituted by a series of partially toothed claws or wheels 24a, 24b, 24c, 24d, which are rotatably associated, by means of adapted second pivots 25a, 25b, with the terminal ends of the second wings 19a, 19b, 19c, 19d.

The teeth 26 of the partially toothed wheels 24a, 24b, 24c, 24d are directed toward the facing, slightly inclined side walls 27a, 27b of the connector 3 and are adapted to interact with them to temporarily couple the cover 6 and the connector 3 to each other, preventing the removal of the cover 6.

The teeth 26, which are similar in shape and arrangement, are also provided at the ends of the second wings 19a, 19b, 19c, 19d.

Advantageously, the partially toothed claws or wheels 24a, 24b, 24c, 24d are pivoted to the second pivots 25a, 25b so that once the teeth are engaged with the port 2 they rotate eccentrically if the cover 6 is lifted.

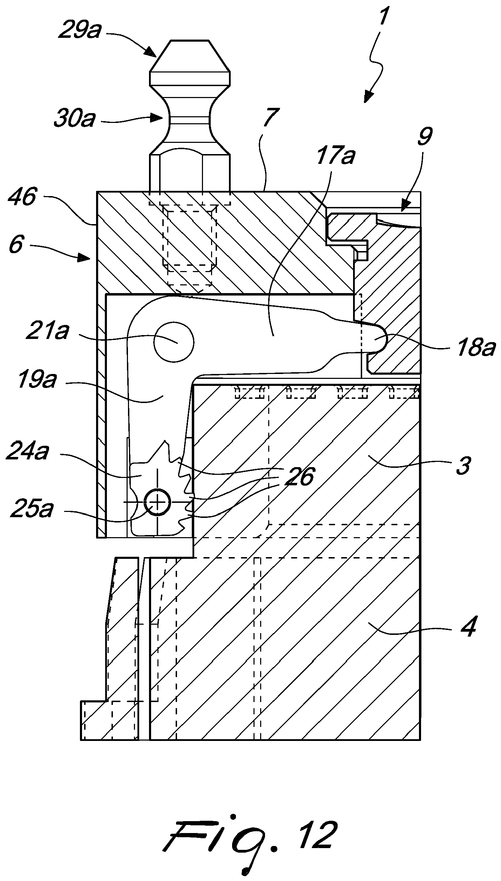

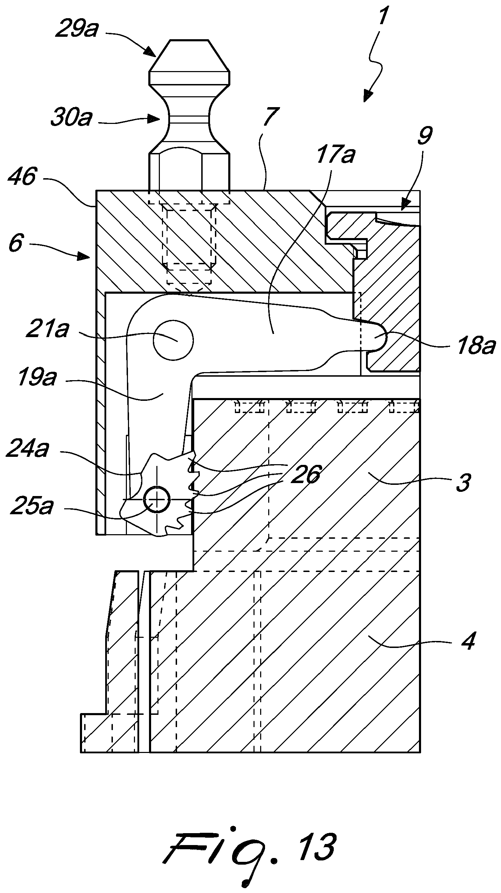

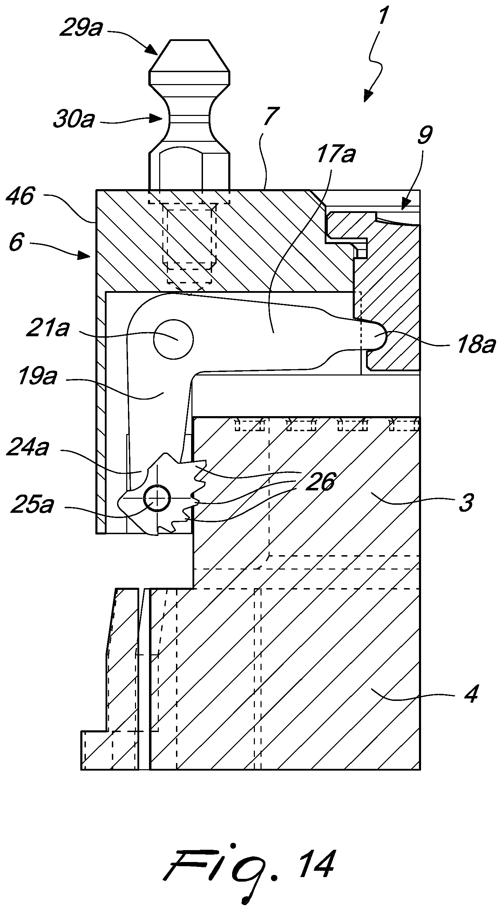

As shown in Figures 12, 13 and 14, the greater the force exerted in attempting to remove the cover 6 from the port 2, the more the teeth 26 resist extraction.

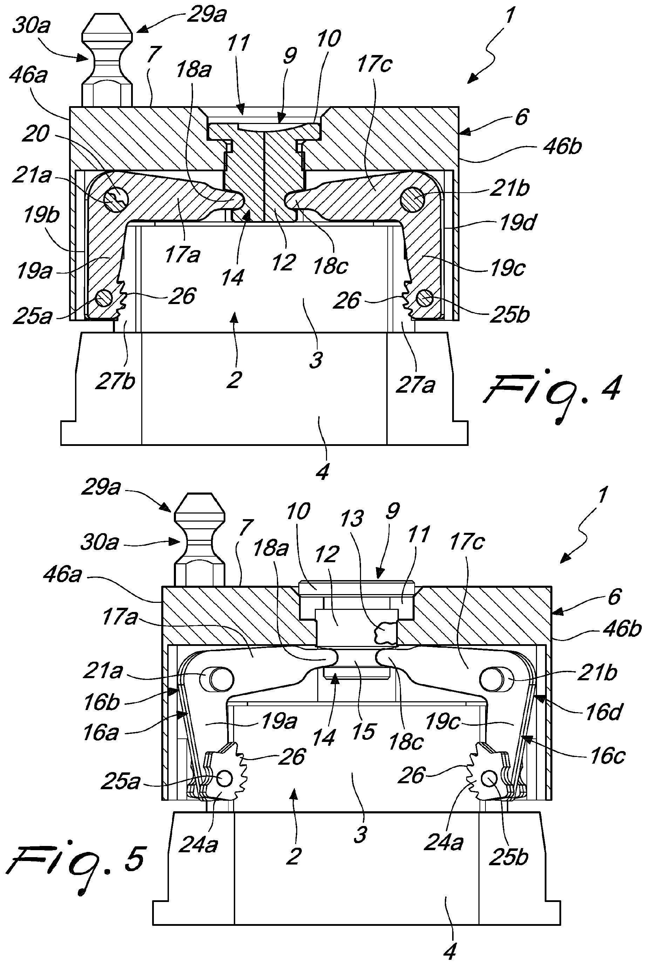

Operation is as follows: when the cover 6 is placed at the connector 3, the screw 9 must be fully tightened and thus with the head 10 accommodated within the first seat 11 and the shank 12 fully screwed into the second seat 13, as shown in Figure 4.

In this position, the teeth 26 do not interact with the side walls 27a, 27b of the connector 3 and therefore the latter and the cover 6 are not coupled together and the connector 3 can be accessed for workshop operations.

The user then unscrews the screw 9 and in this way the shank 12 rises and forces the terminal ends 18a, 18b, 18c, 18d of the pair of two linkages 16a, 16b, 16c, 16d to move upward: in doing so, the teeth 26 are forced to approach and interact with the side walls 27a, 27b of the connector 3, as shown in Figure 5, locking it in its seat and preventing access to it.

In this condition, removal of the cover 6 from the connector 3 is inhibited.

To prevent direct access to the head 10 of the screw 9, there is a protective cap 28 adapted to be placed, in a removable manner, so as to cover the cover 6.

The cap 28 is therefore shaped in such a way as to overlap the cover 6, enveloping it.

The cover 6 advantageously has grip elements for temporary coupling to the cap 28 which are constituted for example by a pair of protrusions 29a, 29b, which are shaped like a mushroom so as to form an annular recess 30a, 30b, protrude at right angles to the sides of the upper end face 7, and are associable therewith at adapted fifth seats 31a, 31b.

The cap 28 is internally provided with third means constituted by a magnetic combination assembly 32 that can be activated by means of a magnetic key 33 and is adapted to mutually lock/release the cover 6 and the cap 28.

The magnetic combination assembly 32 is preferably constituted by two or more cams 34a, 34b, rotatably accommodated in complementarily shaped sixth seats 35a, 35b provided inside the cap 28; magnetic means 36a, 36b, 36c, 36d are accommodated in each of the two cams 34a, 34b.

By placing the magnetic key 33 on a ninth seat 43 provided on the cap 28, the magnetic means 36a, 36b, 36c, 36d inserted in the cams 34a, 34b are oriented according to the lines of force of the magnetic field, thus causing the cams 34a, 34b to rotate.

The rotation of the cams 34a, 34b, actuated by the magnetic key 33, therefore allows to lock or release the connection of the cap 28 to the cover 6 by virtue of adapted mushroom-shaped locking means 37a, 37b, which can move within seventh seats 38a, 38b, formed inside the cap 28, preferably along axes, which are mutually parallel or not and are longitudinal to the cap 28 itself.

A cavity 39a, 39b is radially provided on each of the cams 34a, 34b and the shank 40a, 40b of one of the locking means 37a, 37b can be accommodated temporarily therein.

The insertion of the magnetic key 31 allows to orient the cavities 39a, 39b so that they are axially aligned with the seventh seats 38a, 38b.

The seventh seats 38a, 38b each connect one of the sixth seats 35a, 35b to eighth seats 41a, 41b which are provided at right angles to the cap 28 and are adapted to accommodate the annular recesses 30a, 30b of the pair of protrusions 29a, 29b, which can be removably inserted therein.

The locking means 37a, 37b move in contrast to springs 42a, 42b.

By placing the magnetic key 33 on a ninth seat 43 provided on the cap 28, the magnetic means 36a, 36b, 36c, 36d inserted in the cams 34a, 34b are oriented according to the lines of force of the magnetic field, thus causing the cams 34a, 34b to rotate so as to orient the cavities 39a, 39b in axial alignment with the seventh seats 38a, 38b.

In this condition, with the cap 28 associated with the cover 6, the protrusions 29a, 29b are positioned within the eighth seats 41a, 41b and the shanks 40a, 40b of the locking means 37a, 37b move to be accommodated within the cavities 39a, 39b of the cams 34a, 34b which face the seventh seats 38a, 38b.

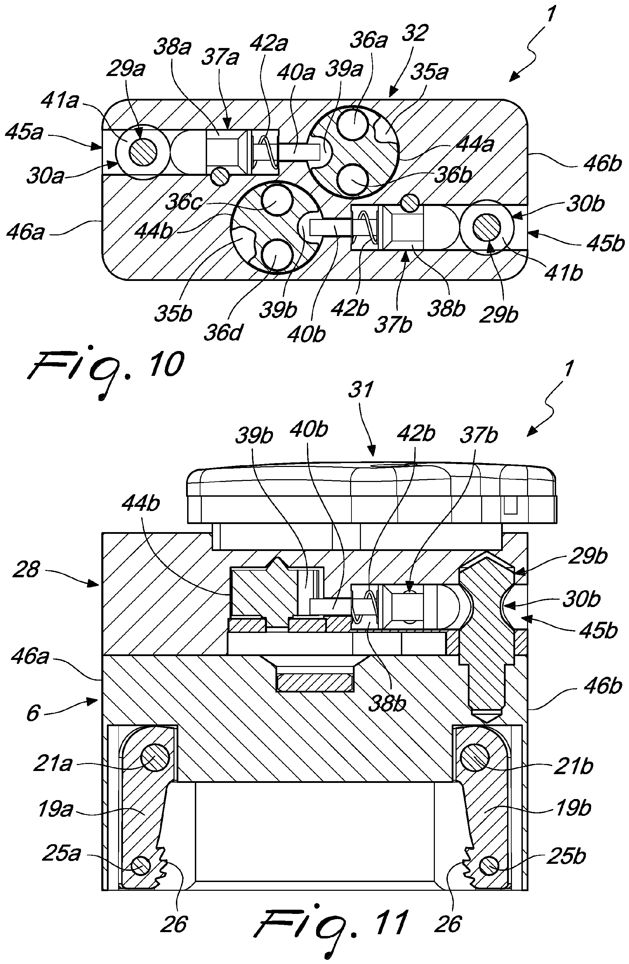

It is thus possible to remove the cap 28 from the cover 6, as shown in Figure 10.

In the condition in which the magnetic key 33 is not used, the locking means 37a, 37b have a length such as to keep them inside the seventh seats 38a, 38b and not have them affect the sixth seats 35a, 35b, since the shanks 40a, 40b abut against the perimetric edge 44a, 44b of the cams 34a, 34b.

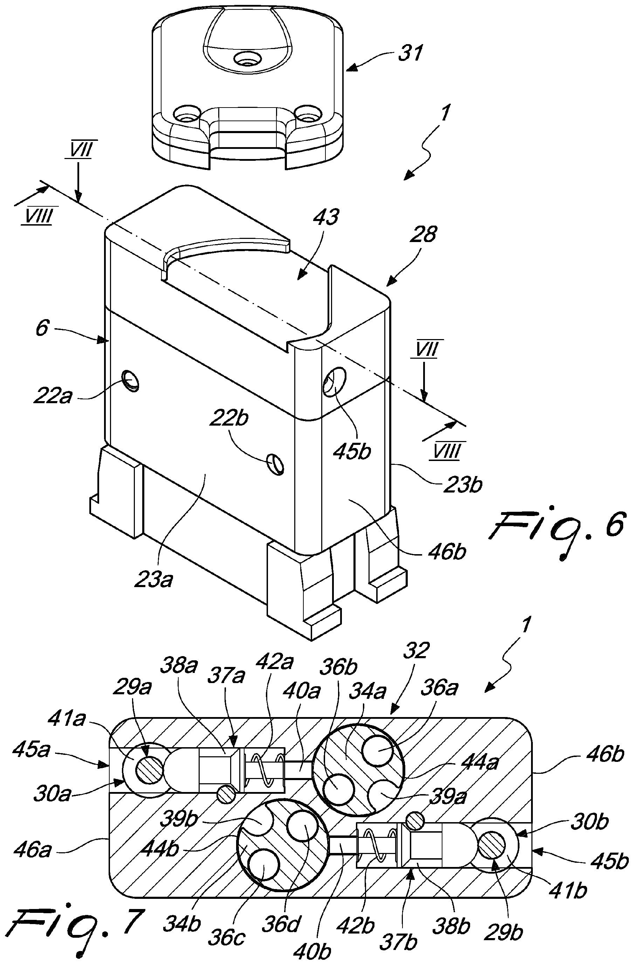

This prevents the removal of the cap 28 from the cover 6, as shown in Figure 7.

The seventh seats 38a, 38b communicate with adapted second holes 45a, 45b provided in the front surfaces 46a, 46b of the cover 6.

It has thus been found that the invention has achieved its intended aim and objects, a device having been devised which quickly and easily prevents connection to ports for access to a vehicle control unit.

Moreover, the device is structurally robust and free from breakage due to its use, and is at the same time structurally simple, occupies little space, can be manufactured with machinery and equipment of a known type, and can be applied quickly and easily applied to any port for access to a vehicle control unit.

Of course, the invention is susceptible of numerous modifications and variations, all of which are within the scope of the accompanying claims.

Naturally, the materials used, as well as the dimensions constituting the individual components of the invention, may be more pertinent according to the specific requirements.

The characteristics indicated as advantageous, convenient or the like may also be omitted or replaced by equivalents.

The disclosures in Italian Patent Application no. 102023000013467, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for locking ports (2) for access to a vehicle control unit, **characterized in that** it is constituted by a cover (6), which can be removably positioned so as to cover an external connector (3) of a port (2) for access to a control unit of a vehicle, said cover being provided with first means (9) adapted to actuate the oscillation of one or more rocker arms or linkages (16a, 16b, 16c, 16d) provided with second means (24a, 24b, 24c, 24d) adapted to interact with said port (2) in order to temporarily couple said cover (6) to said connector (3), a protective cap (28) being removably associable with said cover (6).

2. The locking device (1) according to claim 1, **characterized in that** said connector (3) protrudes from a support (4) which is stably associable with the vehicle and is provided with a series of pins (5) configured to be connected to said control unit, said cover (6) having a substantially box-like shape and being provided with an upper end face (7) on which first means (8) are associated which comprise a screw (9) the head (10) of which can be accommodated at an adapted first seat (11) provided on said upper end face (7), the shank (12) of said screw (9) being rotatably associable at a complementarily threaded second seat (13) which is provided at said upper end face (7) of said cover (6) and is contiguous to said first seat (11), a third annular seat (15) being provided at the terminal end (14) of said shank (12).

3. The locking device (1) according to one or more of the preceding claims, **characterized in that** said first means (8) further comprise at least two pairs of rocker arms or linkages, each composed of two mutually identical rocker arms or linkages (16a, 16b, 16c, 16d), coupled in pairs and essentially L-shaped, each of said pair of two linkages (16a, 16b, 16c, 16d) having a first wing (17a, 17b, 17c, 17d) the terminal end (18a, 18b, 18c, 18d) of which has a rounded shape which is shaped complementarily to said third annular seat (15), so that it can be stably associated with it thereat.

4. The locking device (1) according to one or more of the preceding claims, **characterized in that** each of said pair of two linkages (16a, 16b, 16c, 16d) has a second wing (19a, 19b, 19c, 19d), a fourth through seat (20) being provided, on each of said pair of two linkages (16a, 16b, 16c, 16d), at the connection between said first and second wings (17a, 17b, 17c, 17d, 19a, 19b, 19c, 19d), for a first pivot (21a, 21b) for the pivoting of said wings transversely to said cover (6), said first pivots (21a, 21b) acting, at the ends, at a pair of adapted first holes (22a, 22b) provided transversely to the lateral surfaces (23a, 23b) of said cover (6), said holes lying at an axis that is inclined with respect to said lateral surfaces (23a, 23b).

5. The locking device (1) according to claim 1, **characterized in that** said cover (6) is provided with grip elements for temporary coupling to said protective cap (28) which are constituted by a pair of protrusions (29a, 29b), which are mushroom-shaped so as to form an annular recess (30a, 30b), protrude at right angles to the sides of said upper end face (7), and are associable therewith at fifth seats (31a, 31b).

6. The locking device (1) according to one or more of the preceding claims, **characterized in that** said second wings (19a, 19b, 19c, 19d) are provided with second means adapted to interact with said connector (3) in order to temporarily couple it to said cover (6), said second means being constituted by a series of partially toothed claws or wheels (24a, 24b, 24c, 24d) rotatably associated, by means of adapted second pivots (25a, 25b), to the terminal ends of said second wings (19a, 19b, 19c, 19d), the teeth (26) of said partially toothed claws or wheels (24a, 24b, 24c, 24d) being directed toward the facing side walls (27a, 27b), which are slightly inclined, of said connector (3) and being adapted to interact with them in order to temporarily couple to each other said cover (6) and said connector (3), preventing the removal of said cover (6), teeth (26), similar in shape and arrangement, being provided at the ends of said second wings (19a, 19b, 19c, 19d).

7. The locking device (1) according to one or more of the preceding claims, **characterized in that** said partially toothed claws or wheels (24a, 24b, 24c, 24d) are pivoted to said second pivots (25a, 25b) so as to rotate, once said teeth (26) are engaged with said port (2), eccentrically upon a lifting of said cover (6), so as to contrast the extraction of said cover (6) from said port (2).

8. The locking device (1) according to one or more of the preceding claims, **characterized in that** said protective cap (28) is provided with third means, adapted to interact with a magnetic key (33) for mutually locking/unlocking said cover (6) and said protective cap (28), said third means being constituted by a magnetic combination assembly (32) which can be activated by said magnetic key (33) and is adapted to mutually lock/unlock said cover (6) and said protective cap (28), said magnetic combination assembly (32) being constituted by two or more cams (34a, 34b), which are accommodated rotatably in complementarily shaped sixth seats (35a, 35b) provided inside said cap (28), magnetic means (36a, 36b, 36c, 36d) being accommodated in each of said two cams (34a, 34b), a cavity (39a, 39b) being provided radially on each of said cams (34a, 34b), said magnetic combination assembly (32) comprising locking means (37a, 37b), each provided with a shank (40a, 40b) adapted to be accommodated temporarily in said sixth seats (35a, 35b) or interact with the perimetric edge (44a, 44b) of said cams (34a, 34b).

9. The locking device (1) according to one or more of the preceding claims, **characterized in that** said locking means (37a, 37b) are mushroom-shaped, are movable within seventh seats (38a, 38b) provided inside said cap (28) along longitudinal axes which are mutually parallel or not, each of said seventh seats (38a, 38b) connecting one of said sixth seats (35a, 35b) to eighth seats (41a, 41b) provided at right angles to said cap (28) and being adapted to accommodate said annular recesses (30a, 30b) of said pair of protrusions (29a, 29b), which are removably insertable thereat.

10. The locking device (1) according to one or more of the preceding claims, **characterized in that** said locking means (37a, 37b) move in contrast with springs (42a, 42b) so as to affect said eighth seats (41a, 41b) and are controlled in their movement by said two cams (34a, 34b), which allow said means to be accommodated, if said magnetic key (33) is not used, within said seventh seats (38a, 38b), said locking means (37a, 37b) having such a length that they do not affect said sixth seats (35a, 35b) and having shanks (40a, 40b) which interact with the perimetric edge (44a, 44b) of said cams (34a, 34b).

11. The locking device (1) according to one or more of the preceding claims, **characterized in that** when said magnetic key (33) is placed in a ninth seat (43) provided in said cap (28), said magnetic means (36a, 36b, 36c, 36d) inserted in said cams (34a, 34b) are oriented according to the lines of force of the magnetic field, thus causing the rotation of said cams (34a, 34b) so as to orient said cavities (39a, 39b) in axial alignment with said seventh seats (38a, 38b), in this condition, with said cap (28) associated with said cover (6), said protrusions (29a, 29b) being positioned within said eighth seats (41a, 41b) and said shanks (40a, 40b) of said locking means (37a, 37b) being accommodated within said cavities (39a, 39b) of said cams (34a, 34b) which face said seventh seats (38a, 38b), thus allowing to remove said cap (28) from said cover (6).

12. The locking device (1) according to one or more of the preceding claims, **characterized in that** if said magnetic key (33) is not placed within a ninth seat (43) provided in said cap (28), said locking means (37a, 37b) have such a length as to keep them within said seventh seats (38a, 38b) and not have them affect said sixth seats (35a, 35b), said shanks (40a, 40b) abutting against the perimetric edge (44a, 44b) of said cams (34a, 34b), thus preventing the removal of said cap (28) from said cover (6).
